(19) Europäisches Patentamt
European Patent Office
Office européen des brevets

(11) **EP 4 447 164 A1**

(12) **EUROPEAN PATENT APPLICATION**
published in accordance with Art. 153(4) EPC

(43) Date of publication:
**16.10.2024 Bulletin 2024/42**

(21) Application number: **23907365.3**

(22) Date of filing: **25.10.2023**

(51) International Patent Classification (IPC):
*H01M 4/583* (2010.01)    *H01M 4/36* (2006.01)
*H01M 4/133* (2010.01)    *H01M 4/1393* (2010.01)
*H01M 4/02* (2006.01)

(52) Cooperative Patent Classification (CPC):
**H01M 4/02; H01M 4/133; H01M 4/1393;**
**H01M 4/36; H01M 4/583;** Y02E 60/10

(86) International application number:
**PCT/KR2023/016609**

(87) International publication number:
**WO 2024/136079 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.12.2022 KR 20220183044**

(71) Applicant: **LG Energy Solution, Ltd.**
**Seoul 07335 (KR)**

(72) Inventors:
• **YOON, Jong Su**
**Daejeon 34122 (KR)**

• **LEE, Taek Soo**
**Daejeon 34122 (KR)**
• **CHO, Jin Ho**
**Daejeon 34122 (KR)**
• **JEON, Shin Wook**
**Daejeon 34122 (KR)**
• **KIM, Young Gon**
**Daejeon 34122 (KR)**

(74) Representative: **Plasseraud IP**
**104 Rue de Richelieu**
**CS92104**
**75080 Paris Cedex 02 (FR)**

(54) **NEGATIVE ELECTRODE FOR LITHIUM SECONDARY BATTERY AND METHOD FOR MANUFACTURING SAME**

(57) Disclosed herein relates to a negative electrode for a lithium secondary battery and a manufacturing method thereof, wherein the negative electrode has a structure in which a first negative electrode active layer and a second negative electrode active layer are sequentially stacked on a negative electrode current collector, and includes synthetic graphite and natural graphite as carbon-based negative electrode active materials in the first negative electrode active layer, wherein by controlling the alignment (O.I$_{1st}$) of the carbon-based negative electrode active material contained in the first negative electrode active layer and the content of synthetic graphite in a certain range, there is an advantage that the adhesion of the negative electrode active layer to the negative electrode current collector is excellent, and the life of the secondary battery including it is excellent.

[FIG. 1]

**Description**

[Technical Field]

This application claims the benefit of priority based on Korean Patent Application No. 10-2022-0183044, filed on Dec. 23, 2022, and the entire contents of the Korean patent application are incorporated herein by reference.
The present invention relates to a negative electrode for a lithium secondary battery and a method of manufacturing the same.

[Background Art]

Recently, secondary batteries have been widely applied in small devices such as portable electronics, as well as in medium and large devices such as battery packs or power storage in hybrid vehicles or electric vehicles.
These secondary batteries are chargeable/dischargeable power generators consisting of a laminated structure of a positive electrode/separator/negative electrode, with the positive electrode generally containing lithium metal oxide as a positive electrode active material and the negative electrode containing a carbon-based negative electrode active material such as graphite, so that lithium ions released from the positive electrode are absorbed into the carbon-based negative electrode active material of the negative electrode during charging, and lithium ions contained in the carbon-based negative electrode active material are absorbed into the lithium metal oxide of the positive electrode during discharging, and the charge and discharge are repeated.
Meanwhile, amorphous carbon or crystalline carbon is used as the negative electrode active material for the negative electrode, and among them, crystalline carbon is mainly used due to its high capacity. These crystalline carbons include graphite-based carbons such as natural graphite and synthetic graphite.
Different types of graphite-based carbon have different properties. For example, natural graphite exhibits high power output and excellent adhesion to the current collector, but it is relatively inferior to synthetic graphite in terms of resistance and life characteristics. However, since the synthetic graphite has fewer surface defects and functional groups, its adhesion to the current collector is weak, and when propylene carbonate (PC) is mixed with the electrolyte for the purpose of improving low-temperature performance, there is a problem that the propylene carbonate exfoliates and destroys each layer of the interlayer structure of the graphite.
Therefore, attempts have been made to apply mixed graphite as a negative electrode active material for lithium secondary batteries to utilize the advantages of each by appropriately combining the characteristics of each type. However, the adhesion of such mixed graphite to the current collector is reduced, and it is difficult to reach a satisfactory level in terms of life characteristics and impact stability.
Therefore, there is a need to develop new technologies that can utilize the benefits of graphite-based carbon as a negative electrode active material while addressing its drawbacks.

[Description of the Invention]

[Technical Problem]

The object of the present invention is to provide a negative electrode for lithium secondary battery that includes graphite-based carbon as a negative electrode active material, has a high adhesion to a current collector, and has an excellent battery performance such as life characteristics, and a manufacturing method thereof.

[Technical Solution]

To solve the above-mentioned problems,
In an exemplary embodiment, the present invention provides a negative electrode for lithium secondary battery including:

a negative electrode current collector; a first negative electrode active layer provided on at least one surface of the negative electrode current collector and containing a first carbon-based negative electrode active material; and a second negative electrode active layer provided on the first negative electrode active layer and containing a second carbon-based negative electrode active material, wherein
the first carbon-based negative electrode active material includes natural and synthetic graphite, and
the first negative electrode active layer and the second negative electrode active layer have an alignment (O.I.) of a carbon-based negative electrode active material, represented by Equation 1 below, of 0.1 to 0.9, respectively:

[Equation 1]

$$O.I = I_{004}/I_{110}$$

In Equation 1,

$I_{004}$ represents the area of the peak representing the [0,0,4] crystal face in the X-ray diffraction (XRD) measurement of the negative electrode active layer,

$I_{110}$ represents the area of the peak representing the [1,1,0] crystal face in an X-ray diffraction (XRD) measurement of the negative electrode active layer.

Here, the content of synthetic graphite may exceed 50 wt% with respect to the total weight of the first carbon-based negative electrode active material.

In addition, the second carbon-based negative electrode active material may include synthetic graphite.

Moreover, the alignment ($O.I_{2nd}$) of the secondary carbon-based negative electrode active material may have a ratio of 10% to 100% with respect to the alignment ($O.I_{1st}$) of the first carbon-based negative electrode active material.

The above-mentioned synthetic graphite may be a flaky particle, and the natural graphite may be a spherical particle. In addition, the average particle size of synthetic graphite may be between 5 μm and 20 μm, the average particle size of natural graphite may be between 15 μm and 25 μm, wherein the average particle size of the synthetic graphite may be smaller than the average particle size of natural graphite.

Meanwhile, the total thickness of the first negative electrode active layer and the second negative electrode active layer may be 50 μm to 300 μm.

Here, the average thickness of the first negative electrode active layer may have a ratio of 10% to 100% with respect to the average thickness of the second negative electrode active layer.

Furthermore, in an exemplary embodiment, the present invention provides a manufacturing method of a negative electrode for lithium secondary battery including:

applying a first negative electrode slurry including a first carbon-based negative electrode active material and a second negative electrode slurry including a second carbon-based negative electrode active material on a negative electrode current collector simultaneously;

applying a magnetic field to the applied first negative electrode slurry and the second negative electrode slurry; and

forming a first negative electrode active layer and a second negative electrode active layer by drying a first negative electrode slurry and a second negative electrode slurry in which a magnetic field is applied, wherein

a first carbon-based negative electrode active material includes natural and synthetic graphite, and

the first negative electrode active layer and the second negative electrode active layer have an alignment (O.I) of a carbon-based negative electrode active material, represented by Equation 1 below, of 0.1 to 0.9, respectively:

[Equation 1]

$$O.I = I_{004}/I_{110}$$

In Equation 1,

$I_{004}$ represents the area of the peak representing the [0,0,4] crystal face in the X-ray diffraction (XRD) measurement of the negative electrode active layer,

$I_{110}$ represents the area of the peak representing the [1,1,0] crystal face in an X-ray diffraction (XRD) measurement of the negative electrode active layer.

Here, applying a magnetic field may apply a magnetic field of 2,000G to 6,000G.

In addition, applying a magnetic field is performed for 5 to 60 seconds.

Furthermore, forming a first negative electrode active layer and a second negative electrode active layer may include: drying a first negative electrode slurry and second negative electrode slurry; and rolling a dried first negative electrode slurry and second negative electrode slurry.

[Advantageous Effects]

The negative electrode for a lithium secondary battery according to the present invention has a structure in which a first negative electrode active layer and a second negative electrode active layer are sequentially stacked on a negative electrode current collector, and includes synthetic graphite and natural graphite as carbon-based negative electrode active materials in the first negative electrode active layer, wherein by controlling the alignment (O.I$_{1st}$) of the carbon-based negative electrode active material contained in the first negative electrode active layer and the content of synthetic graphite in a certain range, there is an advantage that the adhesion of the negative electrode active layer to the negative electrode current collector is excellent, and the life of the secondary battery including it is excellent.

[Brief Description of the Drawings]

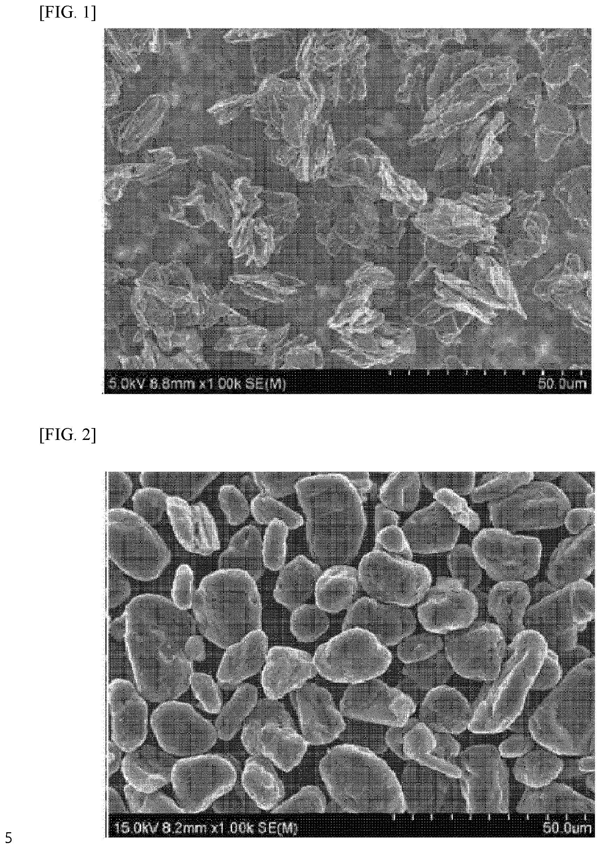

FIGS. 1 and 2 are scanning electron microscope images analyzing the shapes of synthetic graphite and natural graphite, respectively, among the carbon-based negative electrode active materials according to the present invention.

[Best Mode for Carrying out the Invention]

The present invention may have various modifications and various examples, and specific examples are illustrated in the drawings and described in detail in the description.

However, it should be understood that the present invention is not limited to specific embodiments, and includes all modifications, equivalents or alternatives within the spirit and technical scope of the present invention.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

In addition, in the present invention, "comprising as a major component" means that the defined component constitutes more than 50wt% (or more than 50 volume%), more than 60 wt% (or more than 60 volume%), more than 70 wt% (or more than 70 volume%), more than 80 wt% (or more than 80 volume%), more than 90% by weight (or more than 90 volume%), or more than 95 wt% (or more than 95 volume%) with respect to the total weight (or total volume). For example, "comprising graphite as a major component of the negative electrode active material" could mean that graphite constitutes more than 50 wt%, more than 60 wt%, more than 70 wt%, more than 80 wt%, more than 90 wt%, or more than 95 wt% with respect to the total weight of the negative electrode active material, and in some cases, the entire negative electrode active material could be made of graphite, meaning that graphite constitutes 100 wt%.

Hereinafter, the present invention will be described in more detail.

**Negative electrode for lithium secondary battery**

In an exemplary embodiment, the present invention provides a negative electrode for lithium secondary battery including:

a negative electrode current collector; a first negative electrode active layer provided on at least one surface of the negative electrode current collector and containing a first carbon-based negative electrode active material; and a second negative electrode active layer provided on the first negative electrode active layer and containing a second carbon-based negative electrode active material, wherein
the first carbon-based negative electrode active material includes natural and synthetic graphite, and
the first negative electrode active layer and the second negative electrode active layer have an alignment (O.I) of a carbon-based negative electrode active material, represented by Equation 1 below, of 0.1 to 0.9, respectively:

[Equation 1]

$$O.I = I_{004}/I_{110}$$

In Equation 1,

$I_{004}$ represents the area of the peak representing the [0,0,4] crystal face in the X-ray diffraction (XRD) measurement of the negative electrode active layer,

$I_{110}$ represents the area of the peak representing the [1,1,0] crystal face in an X-ray diffraction (XRD) measurement of the negative electrode active layer.

A negative electrode for a lithium secondary battery according to the present invention includes a negative electrode active layer including a carbon-based active material on at least one side of the negative electrode current collector. The negative electrode active layer is a layer implementing the electrical activity of the negative electrode, and is prepared by applying an electrode slurry including the negative electrode active material, which implements an electrochemical redox reaction during charging and discharging of the battery, to both sides of the electrode current collector, followed by drying and rolling.

In this case, the negative electrode active layer includes a carbon-based active material as the negative electrode active material to implement electrical activity through a reversible redox reaction during charging and discharging of the battery. Specifically, the carbon-based active material refers to a material having carbon atoms as the main component, and such a carbon-based active material may include graphite-based carbon. The graphite-based carbon may include one or more among natural graphite and synthetic graphite.

The graphite-based carbon has a powder form, and the powder may comprise particles having a spherical, flaky, irregular, or other shape. Here, "flaky particles" means particles having a plate-like shape with a small thickness, and the surface of the particles may have an average aspect ratio of 1:2 to 1:20.

In one example, the synthetic graphite may include flaky particles and the natural graphite may include spherical particles.

In this case, the synthetic graphite preferably has a structure that forms a spherical assembly formed by a plurality of flaky particles aggregated together, as shown in FIG. 1. Furthermore, one graphite assembly may be formed by an aggregation of 2 to 100, preferably 3 to 20, pieces of flaky shaped graphite. By controlling the particle shape of the synthetic graphite as described above, the present invention can improve the energy density. Furthermore, the specific surface area relative to the average size of the synthetic graphite can be increased, so that adhesion to the negative electrode current collector can be improved.

In addition, the natural graphite may include spherical particles as shown in FIG. 2, but may have a sphericity of greater than or equal to 0.75, for example, 0.75 to 1.0; 0.75 to 0.95; 0.8 to 0.95; or 0.90 to 0.99. As used herein, "sphericity" may refer to the ratio of the shortest diameter (short diameter) to the longest diameter (long diameter) of any diameter passing through the center of the particle when the carbon-based negative electrode active material is projected as a two-dimensional particle, wherein a sphericity of 1 means that the particle has a spherical shape. The sphericity may be measured by a particle shape analyzer, or by analyzing particle images by scanning electron microscopy (SEM). The present invention has the advantage that by realizing the shape of natural graphite close to a spherical shape, the electrical conductivity of the negative electrode active layer can be realized high, thereby improving the capacity of the battery, and the specific surface area of the particles can be increased, thereby improving the adhesion between the negative electrode active layer and the current collector.

Further, the graphite-based carbon may be controlled so that its size satisfies a predetermined range. Specifically, the average particle size of the synthetic graphite may be 5 $\mu$m to 20 $\mu$m, the average particle size of the natural graphite may be 15 $\mu$m to 25 $\mu$m, and the average particle size of the natural graphite may be greater than the average particle size of the synthetic graphite. Here, the average particle size of the synthetic graphite may refer to an average size of an assembly of a plurality of flaky particles.

Specifically, the average particle size (D50) of the synthetic graphite may be 5 $\mu$m to 15 $\mu$m; 5 $\mu$m to 12 $\mu$m; 10 $\mu$m to 20 $\mu$m; 15 $\mu$m to 20 $\mu$m; 12 $\mu$m to 18 $\mu$m; or 8 $\mu$m to 14 $\mu$m, and the average particle size (D50) of the natural graphite may be 15 $\mu$m to 20 $\mu$m; 20 $\mu$m to 25 $\mu$m; 18 $\mu$m to 23 $\mu$m; or 21 $\mu$m to 25 $\mu$m.

In one example, the synthetic graphite may have an average particle size of 8 $\mu$m to 10 $\mu$m, and the natural graphite may have an average particle size of 18 $\mu$m to 20 $\mu$m.

If the minimum particle diameter of synthetic graphite and natural graphite is less than 5 $\mu$m and 15 $\mu$m, respectively, a large amount of binder is required due to the increase in the number of particles per unit volume, resulting in a decrease in the electrical properties of the negative electrode, and a high volume change rate due to shrinkage and expansion of the negative electrode active material during charge and discharge of the battery may reduce the durability of the negative electrode active layer. On the other hand, when the maximum particle diameter of synthetic graphite and natural graphite exceeds 20 $\mu$m and 25 $\mu$m, respectively, the expansion becomes severe, and the cohesion between particles and the cohesion between particles and the current collector decreases as the charge and discharge are repeated, which can significantly reduce the cycling characteristics.

Furthermore, by controlling the average particle size of the synthetic graphite to be smaller than the natural graphite, the present invention may implement a structure in which the synthetic graphite is densely packed between the plurality of natural graphite contained in the negative electrode active layer. With such a structure, the negative electrode of the present invention can have a reduced resistance of the negative electrode active layer and an increased energy density of the negative electrode, resulting in a better output performance.

On the other hand, the negative electrode active layer may have a structure in which two separate layers are stacked. Specifically, the negative electrode according to the present invention may have a structure in which a first negative electrode active layer is provided on the negative electrode current collector and a second negative electrode active layer is provided on the first negative electrode active layer. By implementing the structure of the negative electrode active layer as a two-layer structure, the present invention can more easily control the properties required for each region of the negative electrode active layer. In other words, the negative electrode active layer according to the present invention has the advantage of realizing a higher adhesion between the active layer and the negative electrode current collector in the region adjacent to the negative electrode current collector, and a higher density of energy generated by the electrochemical reaction in the region adjacent to the surface of the active layer, where a higher density of electrochemical reaction appears.

To this end, the first negative electrode active layer and the second negative electrode active layer comprising the negative electrode active layer may have different compositions.

Specifically, the first negative electrode active layer includes a first carbon-based negative electrode active material and the second negative electrode active layer includes a second carbon-based negative electrode active material. In this case, the first carbon-based active material and the second carbon-based active material include at least one type of graphite-based carbon among natural graphite and synthetic graphite, but the type and content/content ratio of the graphite-based carbon contained in each carbon-based active material may be different.

In one example, the first carbon-based negative electrode active material may include natural graphite and synthetic graphite, and the second carbon-based negative electrode active material may include only synthetic graphite.

Here, the first carbon-based negative electrode active material may include synthetic graphite in an amount greater than 50wt% based on the total weight of the first carbon-based negative electrode active material, or more specifically, in an amount greater than 60wt%, 65 wt% by weight, 70 wt% by weight, 75 wt% by weight, 80 wt%, 60 wt% to 99 wt%, 60 wt% to 90wt%, 65 wt% to 95 wt%, 70 wt% to 95 wt%, 75 wt% to 95wt%, or 75 wt% to 90 wt% based on the total weight of the first carbon-based negative electrode active material.

By controlling the content of synthetic graphite in the first carbon-based negative electrode active material contained in the first negative electrode active layer in the above range, the electrical resistance in the area adjacent to the negative electrode current collector can be reduced, so that the high power performance of the negative electrode can be improved, and the deterioration of the negative electrode active layer can be suppressed when the secondary battery is charged and discharged for a long time.

Furthermore, the negative electrode according to the present invention may have each of the first carbon-based negative electrode active material and the second carbon-based negative electrode active material contained in the first negative electrode active layer and the second negative electrode active layer oriented at a predetermined angle. Here, "orienting (or aligning) the carbon-based negative electrode active material" may mean that certain crystal faces representing the planar molecular structure of the carbon-based negative electrode active material, specifically graphite-based carbon, are arranged to have a predetermined angle/slope with respect to the negative electrode current collector. This is different from the fact that particles of graphite-based carbon themselves have is arranged so that certain faces are at a certain angle/slope to the negative electrode current collector.

In the present invention, the carbon-based negative electrode active material, e.g., graphite-based carbon, contained in the negative electrode active layer may be aligned such that its crystal faces are near perpendicular to the negative electrode current collector, more specifically, it may be aligned such that it has an angle of 60° or more, 70° or more, 70-90°, 80-90°, 65-85°, or 70-85° with respect to the negative electrode current collector. The alignment of such carbon-based negative electrode active materials (e.g., graphite-based carbon) can be determined by crystallographic analysis of the carbon-based active materials contained in the negative electrode active layer.

In one example, the negative electrode active layer may be such that the carbon-based active material is aligned in a certain direction with respect to the negative electrode current collector, such that an X-ray diffraction (XRD) measurement of the negative electrode active layer shows an average alignment of the carbon-based active material, represented by Equation 1 below, of 0.1 to 0.9:

$$[\text{Equation 1}]$$

$$O.I = I_{004}/I_{110}$$

In Equation 1,

$I_{004}$ represents the area of the peak representing the [0,0,4] crystal face in the X-ray diffraction (XRD) measurement of the negative electrode active layer,

$I_{110}$ represents the area of the peak representing the [1,1,0] crystal face in an X-ray diffraction (XRD) measurement of the negative electrode active layer.

Equation 1 may be an indicator of the degree to which the crystal structure of the carbon-based active material, namely graphite-based carbon, is aligned in a certain direction, specifically with respect to the surface of the negative electrode current collector, as measured by X-ray diffraction. More specifically, during X-ray diffraction measurements, the negative electrode active layer shows peaks for graphite, which is a carbon-based active material, at $2\theta=26.5\pm0.2°$, $42.4\pm0.2°$, $43.4\pm0.2°$, $44.6\pm0.2°$, $54.7\pm0.2°$, and $77.5\pm0.2°$. These represent the [0,0,2], [1,0,0], [1,0,1]R, [1,0,1]H, [0,0,4], and [1,1,0] crystal faces of the graphite contained in the negative electrode active layer. In addition, the peak at $2\theta=43.4\pm0.2°$ can be seen as an overlap of the peaks corresponding to the [1,0,1] R plane of carbon-based materials and the [1,1,1] plane of current collectors, such as Cu.

Among these, the ratio of the area of the peak at $2\theta=77.5\pm0.2°$, representing the [1,1,0] plane, to the peak at $2\theta=54.7\pm0.2°$, representing the [0,0,4] plane, specifically the ratio of the areas obtained by integrating the intensity of these peaks, can measure the degree of alignment (O.I) of the carbon-based active material (.e., the graphite-based carbon). Since the peak at $2\theta=54.7\pm0.2°$ represents the [0,0,4] plane of graphite, which has a slope relative to the negative electrode current collector, the alignment degree (O.I) suggests that values closer to 0 indicate an slope of approximately 90° relative to the surface of the negative electrode current collector, and higher values suggest a slope closer to 0° or 180°.

Furthermore, the negative electrode of the present invention can have the carbon-based active material contained in the first and second negative electrode active layers, respectively, aligned in a certain direction relative to the negative electrode current collector, allowing the carbon-based active materials contained in the first and second active layers to have different alignments (O.I). Specifically, the first carbon-based active material in the first negative electrode active layer can have a higher alignment (O.I) than the second carbon-based active material in the second negative electrode active layer.

In one example, the alignment ($O.I_{2nd}$) of the second carbon-based active material contained in the second negative electrode active layer may have a ratio of 10% to 100% with respect to the alignment ($O.I_{1st}$) of the carbon-based active material contained in the first negative electrode active layer, more specifically, a ratio of 50% to 99%; 60% to 99%; 70% to 99%; 80% to 99%; or 60% to 85%.

In this case, the alignment ($O.I_{2nd}$) of the carbon-based active material contained in the second negative electrode active layer may be 0.1 to 0.9, and more specifically may be 0.1 to 0.7; 0.1 to 0.5; 0.2 to 0.6; 0.4 to 0.7; 0.3 to 0.5; or 0.1 to 0.4.

In the negative electrode according to the present invention, by controlling the alignment (O.I) of the carbon-based active materials contained in the first negative electrode active layer and the second negative electrode active layer, respectively, as described above; the electrolyte and lithium mobility in the second negative electrode active layer can be improved, thereby increasing the electrode capacity; and the adhesion of the first negative electrode active layer and the negative electrode current collector can be further strengthened.

Further, in the second negative electrode active layer, the second carbon-based negative electrode active material is aligned to have a certain angle/slope to the negative electrode current collector, so that it may exhibit a predetermined color difference value upon CIE colorimetric analysis of any three points located on the surface.

In one example, the second negative electrode active layer may have an L* value of 40 or less and a ΔL* of less than 10 in a CIE colorimetric analysis of any three points located on the surface. More specifically, the L* value may be 30 to 40; 30 to 35; 32 to 35; or 31 to 34.5, and the ΔL* may be less than 8, less than 5, less than 3, or less than 2, based on a CIE colorimetric analysis of any three points located on the surface of the negative electrode active layer.

The L* value is a factor indicating the brightness of a color, where L*=0 indicates black, and L*=100 indicates white. The negative electrode active layer in the present invention is a carbon-based negative electrode active material containing graphite as the main component, which exhibits a black color and thus has an L* of 30 or more, and the graphite contained in the negative electrode active layer is uniformly crystalline oriented with respect to the negative electrode current collector, so that the deviation of L* at multiple points (i.e., ΔL*) can be low.

Meanwhile, the total thickness of the first negative electrode active layer and the second negative electrode active layer may be from 50 μm to 300 μm, more specifically from 50 μm to 250 μm; from 100 μm to 250 μm; or from 100 μm to 200 μm. By adjusting the total thickness of the negative electrode active layer to the above range, the present invention can not only increase the energy density of the electrode, but also uniformly control the alignment of the carbon-based active material contained in the negative electrode active layer.

Furthermore, the average thickness of the first negative electrode active layer may have a ratio of 10% to 100% with respect to the average thickness of the second negative electrode active layer, more specifically, it may have a ratio of 10% to 50%; 10% to 40%; 30% to 50%; 40% to 70%; 50% to 99%; 60% to 99%; 70% to 99%; 60% to 85%; or 80% to 100% with respect to the average thickness of the second negative electrode active layer. By adjusting the average thickness of the first negative electrode active layer to the above range, the present invention can improve the adhesion of the negative electrode active layer to the negative electrode current collector while facilitating an increase in the charge/discharge capacity and power output that the entire negative electrode active layer can implement.

Meanwhile, the first negative electrode active layer and the second negative electrode active layer according to the present invention may further include a silicon-based negative electrode active material together with a carbon-based negative electrode active material.

Such a silicon-based negative electrode active material may include a silicon-based material including at least one of silicon (Si), silicon carbide (SiC), silicon monoxide (SiO), and silicon dioxide (SiO2). Here, the silicon-based material may be represented by silicon oxide (SiOq , wherein $0.8 \leq q \leq 2.5$) when silicon monoxide (SiO) and silicon dioxide (SiO2) are uniformly mixed or compounded and included in the negative electrode active layer.

Furthermore, the silicon-based negative electrode active material may be included in an amount of 1 to 20 wt% based on the total weight of the negative electrode active material contained in each negative electrode active layer, and more specifically from 1 to 9 wt%, 3 to 7 wt%, 5 to 15 wt%, 11 to 19 wt%, or 13 to 17 wt% based on the total weight of the negative electrode active material.

By adjusting the content of the silicon-based negative electrode active material to the above range, the present invention can minimize the rate of change of the volume of the negative electrode active layer with charge and discharge, and at the same time improve the charge capacity per unit mass while reducing the lithium consumption and irreversible capacity loss during the initial charge and discharge of the battery.

Furthermore, the first negative electrode active layer and the second negative electrode active layer according to the present invention may optionally further include, in addition to the negative electrode active material, a conductive material, a binder, other additives, and the like as required.

The conductive material may include one or more types among carbon black, acetylene black, ketjen black, carbon nanotubes, carbon fiber, and the like, but is not limited thereto.

In one example, the negative electrode active layer may contain carbon black, carbon nanotubes, carbon fibers, or the like as a conductive material, either alone or in combination.

In this case, the content of the conductive material may be 0.1 to 10 parts by weight, more specifically, 0.1 to 8 parts by weight, 0.1 to 5 parts by weight, 0.1 to 3 parts by weight, 2 to 6 parts by weight, or 0.5 to 2 parts by weight, relative to the total 100 parts by weight of the negative electrode active layer. By controlling the content of the conductive material to the above range, the present invention can prevent the resistance of the negative electrode from increasing due to a low content of the conductive material, thereby reducing the charging capacity, and the content of the negative electrode active material from decreasing due to an excessive amount of the conductive material, thereby reducing the charging capacity, or the rapid charging characteristics from decreasing due to an increase in the loading amount of the negative electrode active layer.

Furthermore, the binder may be suitably applied as a component that assists in the bonding of the active material and the conductive material and the like to the current collector, to the extent that it does not degrade the electrical properties of the electrode. Specifically, it may include one or more binders selected from the group consisting of vinylidene fluoride-hexafluoropropylene copolymer (PVDF-co-HFP), polyvinylidenefluoride (PVdF), polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer, sulfonated ethylene-propylene-diene monomer, styrene-butadiene rubber, and fluorinated rubber.

The content of the binder may be from 0.1 to 10 parts by weight, more specifically from 0.1 to 8 parts by weight, from 0.1 to 5 parts by weight, from 0.1 to 3 parts by weight, or from 2 to 6 parts by weight, based on a total of 100 parts by weight of the negative electrode active layer. By controlling the content of the binder contained in the negative electrode active layer to the above range, the present invention can prevent the adhesion of the active layer from deteriorating due to a low content of binder or the electrical properties of the electrode from deteriorating due to an excess of binder.

Furthermore, the negative electrode current collector is not particularly limited as long as it has a high conductivity without causing chemical changes in the battery, and for example, copper, stainless steel, nickel, titanium, calcined carbon, and the like may be used, and in the case of copper or stainless steel, those that are surface treated with carbon, nickel, titanium, silver, and the like may also be used. Furthermore, the average thickness of the negative electrode current collector may be suitably applied from 1 to 500 $\mu$m, considering the conductivity and total thickness of the negative electrode being manufactured.

## Lithium secondary battery

Furthermore, in an exemplary embodiment, the present invention provides

A lithium secondary battery including an electrode assembly including a positive electrode, a negative electrode of the present invention as described above, and a separator disposed between the positive electrode and negative electrode.

A lithium secondary battery according to the present invention includes an electrode assembly having a plurality of positive electrodes, separators, and negative electrodes each arranged sequentially; and an electrolyte composition having a lithium salt and an electrolyte additive dissolved in a non-aqueous organic solvent. In this case, the lithium secondary battery includes the negative electrode of the present invention having a structure in which a first negative electrode active layer and a second negative electrode active layer are sequentially stacked on the negative electrode current collector, and includes synthetic graphite and natural graphite as carbon-based negative electrode active materials in the first negative electrode active layer, wherein the alignment ($O.I_{1st}$) of the carbon-based negative electrode active material contained in the first negative electrode active layer and the content of synthetic graphite is controlled in a certain range. Accordingly, the lithium secondary battery has the advantage of excellent adhesion between the negative electrode active layer and the negative electrode current collector, and the secondary battery including the negative electrode has an excellent battery life.

The negative electrode has the same configuration as described above, so the specific description is omitted.

In addition, the positive electrode is provided with a positive electrode active layer prepared by applying, drying, and pressing a slurry including a positive electrode active material onto the positive electrode current collector, and may optionally further include a conductive material, a binder, other additives, and the like, as desired.

The positive electrode active material is a material capable of electrochemically reacting on the positive electrode current collector and may include one or more of the lithium metal oxides represented by Chemical Formula 1 and Chemical Formula 2 below that are capable of reversibly intercalating and deintercalating lithium ions:

[Chemical Formula 1] $\quad Li_x[Ni_yCo_zMn_wM^1_v]O_2$

[Chemical Formula 2] $\quad LiM^2_pMn_qP_rO_4$

In Chemical Formulas 1 and 2,

$M^1$ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
x, y, z, w, and v are $1.0 \leq x \leq 1.30$, $0.5 \leq y < 1$, $0 < z \leq 0.3$, $0 < w \leq 0.3$, $0 \leq v \leq 0.1$, respectively, where y+z+w+v=1,
$M^2$ is Ni, Co, or Fe,
p is $0.05 \leq p \leq 1.0$,
q is either 1-p or 2-p, and
r is 0 or 1.

The lithium metal oxides represented by Chemical Formulas 1 and 2 contain high amounts of nickel (Ni) and manganese (Mn), respectively, and when used as positive electrode materials, offer the advantage of being able to stably supply high capacity and/or high voltage electricity.

Here, examples of lithium metal oxides represented by Chemical Formula 1 include $LiNi_{0.8}Co_{0.1}Mn_{0.1}O_2$, $LiNi_{0.6}Co_{0.2}Mn_{0.2}O_2$, $LiNi_{0.9}Co_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, $LiNi_{0.7}Co_{0.1}Mn_{0.1}Al_{0.1}O_2$, etc., and lithium metal oxides represented by Chemical Formula 2 may include $LiNi_{0.7}Mn_{1.3}O_4$; $LiNi_{0.5}Mn_{1.5}O_4$; $LiNi_{0.3}Mn_{1.7}O_4$, $LiFePO_4$, $LiFe_qMn_{1-q}PaO_4$, etc., which may be used alone or in combination.

Additionally, the positive electrode active material may be included in an amount of 85 part by weight or more based on the weight of the positive electrode active layer, specifically, 90 part by weight or more, 93 part by weight or more, or 95 part by weight or more.

Furthermore, the positive electrode active layer may further include a conductive material, a binder, and other additives in addition to the positive electrode active material.

Here, the conductive material is used to improve the electrical performance of the positive electrode, can be applied as commonly utilized in the industry, but specifically, it may include one or more types selected from a group consisting of natural graphite, synthetic graphite, carbon black, acetylene black, Denka black, Ketjen black, Super-P, channel black, furnace black, lamp black, summer black, graphene, and carbon nanotubes.

Furthermore, the conductive material may be included in an amount of 0.1 to 5 parts by weight based on the weight of each positive electrode active layer, more specifically 0.1 to 4 parts by weight; 2 to 4 parts by weight; 1.5 to 5 parts by weight; 1 to 3 parts by weight; 0.1 to 2 parts by weight; or 0.1 to 1 part by weight.

Moreover, the binder serves to bind the positive electrode active material, positive electrode additives, and conductive material together, and it may be used without being limited as long as it possesses this function. Specifically, the binder may include one or more types of resins selected from a group consisting of polyvinylidene fluoride-hexafluoropropylene copolymer (PVdF-co-HFP), polyvinylidene fluoride (PVdF), polyacrylonitrile, polymethylmethacrylate, and copolymers thereof. As an example, the binder may include polyvinylidenefluoride (PVdF).

In addition, the binder may be included in an amount of 1 to 10 parts by weight based on the weight of each positive electrode active layer, specifically may be included in the amount of 2 to 8 parts by weight; or 1 to 5 parts by weight.

The total thickness of the positive electrode active layer is not specifically limited, but it may be between 50 $\mu$m to 300 $\mu$m, more specifically, 100 $\mu$m to 200 $\mu$m; 80 $\mu$m to 150 $\mu$m; 120 $\mu$m to 170 $\mu$m; 150 $\mu$m to 300 $\mu$m; 200 $\mu$m to 300 $\mu$m; or 150 $\mu$m to 190 $\mu$m.

In addition, as a positive electrode current collector, the positive electrode may use one that does not induce chemical changes in the battery while possessing high conductivity. For example, stainless steel, aluminum, nickel, titanium, vitreous carbon, etc. may be used, and in cases of aluminum or stainless steel, those that are surface treated with carbon, nickel, titanium, silver, etc., may be used. Additionally, the average thickness of the current collector can be appropriately applied between 3 to 500 $\mu$m, considering the conductivity and total thickness of the positive electrode to be manufactured.

Meanwhile, the separator interposed between the positive electrode and negative electrode of each unit cell is an insulating thin film with high ion permeability and mechanical strength. It is not particularly limited as long as it is conventionally used in the industry, but specifically may use those including one or more types of polymers such as chemically resistant and hydrophobic polypropylene; polyethylene; polyethylene-propylene copolymer. The separator may have the form of a porous polymeric substrate, such as a sheet or nonwoven fabric including the polymer described above, and in some cases may have the form of a composite separator in which organic or inorganic particles are coated by an organic binder on the porous polymeric substrate. Furthermore, the separator may have an average pore diameter of 0.01 to 10 $\mu$m, and an average thickness of 5 to 300 $\mu$m.

Meanwhile, the lithium secondary battery according to the present invention is not specifically limited but may take the form of a secondary battery that includes a stack type; zigzag type; or zigzag-stack type electrode assembly. For instance, the lithium secondary battery according to the present invention may be a pouch-type secondary battery or a prismatic secondary battery.

## Manufacturing method of negative electrode

Furthermore, in an exemplary embodiment, the present invention provides
A manufacturing method of a negative electrode for lithium secondary battery including:

applying a first negative electrode slurry including a first carbon-based negative electrode active material and a second negative electrode slurry including a second carbon-based negative electrode active material on a negative electrode current collector simultaneously;
applying a magnetic field to the applied first negative electrode slurry and the second negative electrode slurry; and
forming a first negative electrode active layer and a second negative electrode active layer by drying a first negative electrode slurry and a second negative electrode slurry in which a magnetic field is applied, wherein
a first carbon-based negative electrode active material includes natural and synthetic graphite, and
the first negative electrode active layer and the second negative electrode active layer have an alignment (O.I) of a carbon-based negative electrode active material, represented by Equation 1 below, of 0.1 to 0.9, respectively:

$$[\text{Equation 1}]$$

$$O.I = I_{004}/I_{110}$$

In Equation 1,

$I_{004}$ represents the area of the peak representing the [0,0,4] crystal face in the X-ray diffraction spectroscopy (XRD) measurement of the negative electrode active layer,
$I_{110}$ represents the area of the peak representing the [1,1,0] crystal face in an X-ray diffraction (XRD) measurement of the negative electrode active layer.

A method for manufacturing a negative electrode according to the present invention is to apply a negative electrode slurry including a carbon-based active material on a negative electrode current collector, apply a magnetic field to a surface of the applied negative electrode slurry to align the carbon-based active material in the negative electrode slurry to have a predetermined angle with respect to the surface of the negative electrode current collector, and subsequently dry the negative electrode slurry with a reduced disorder of the carbon-based active material to form a negative electrode active layer.

Here, applying the negative electrode slurry may be performed at once by simultaneously discharging two negative electrode slurries onto the negative electrode current collector.

Specifically, applying the negative electrode slurry may be performed by simultaneously applying a first negative electrode slurry including a first carbon-based negative electrode active material and a second negative electrode slurry including a second carbon-based negative electrode active material onto the negative electrode current collector.

In this case, the first negative electrode slurry and the second negative electrode slurry may have different compositions. Specifically, the first negative electrode slurry includes a first carbon-based negative electrode active material and the second negative electrode slurry includes a second carbon-based negative electrode active material. In this case, the first carbon-based active material and the second carbon-based active material include at least one type of graphite-based carbon among natural graphite and synthetic graphite, but the type and content/content ratio of the graphite-based carbon contained in each carbon-based active material may be different.

In one example, the first carbon-based negative electrode active material may include natural graphite and synthetic graphite, and the second carbon-based negative electrode active material may include only synthetic graphite.

The configurations for particle shape, average particle size, etc. for natural graphite and synthetic graphite have the same configurations as those described above, so specific descriptions will be omitted.

Furthermore, applying the first negative electrode slurry and applying the second negative electrode slurry may be applied without being limited as long as it is a method conventionally applied in the art. For example, the application may be performed by dip coating, die coating, comma coating, gravure coating, or bar coating methods, preferably by die coating utilizing a dual slot die.

Furthermore, applying a magnetic field to the first negative electrode slurry and the second negative electrode slurry may be a step of aligning the crystal faces of the carbon-based active material contained in each negative electrode slurry to have a predetermined angle with respect to the negative electrode current collector. For this purpose, applying a magnetic field may apply a magnetic field to the surface of the negative electrode slurry applied sequentially on the negative electrode current collector, i.e., the exposed surface of the second negative electrode slurry, such that the first negative electrode slurry located in the lower part of the second negative electrode slurry may also have the crystal surface of the carbon-based negative electrode active material aligned at a predetermined angle by the applied magnetic field.

Here, the alignment (O.I) of the carbon-based active materials in each of the aforementioned negative electrode slurries can be controlled by the strength of the applied magnetic field or the time of exposure to the magnetic field.

For example, applying the magnetic field may include applying a magnetic field of 2,000 G (Gauss) to 6,000 G (Gauss), more specifically, a magnetic field of 2,500 G to 5,500 G; 3,000 G to 5,500 G; 3,500 G to 5,500 G; 4,000 G to 5,500 G; 3,500 G to 4,500 G; or 4,500 G to 5,000 G.

Further, applying the magnetic field may be performed for a period of 5 seconds to 60 seconds, and more particularly, may be performed for a period of 10 seconds to 60 seconds; 10 seconds to 30 seconds; 30 seconds to 60 seconds; 40 seconds to 50 seconds; 15 seconds to 35 seconds; or 10 seconds to 50 seconds.

In one example, applying the magnetic field may include applying a magnetic field of $4,700 \pm 100$ G to the negative electrode slurry for 12 seconds to 33 seconds.

By applying a magnetic field to the second negative electrode slurry to satisfy the magnetic field strength and application time described above in the step of applying the magnetic field, the present invention can align the second carbon-based negative electrode active material contained in the second negative electrode slurry as well as the first carbon-based active material of the first negative electrode slurry located in the lower part of the second negative electrode slurry to have a predetermined angle with respect to the negative electrode current collector.

Further, forming the first negative electrode active layer and the second negative electrode active layer may include the steps of drying the first negative electrode slurry and the second negative electrode slurry; and rolling the dried first negative electrode slurry and the second negative electrode slurry.

In this case, drying the first negative electrode slurry and the second negative electrode slurry may be applied without being particularly limited as long as it is a method that is capable of maintaining the alignment of the carbon-based active material contained within the negative electrode active layer.

For example, the drying step may include drying the negative electrode slurry by applying thermal energy to the negative electrode slurry using a hot air dryer, a vacuum oven, or the like.

Furthermore, rolling the dried negative electrode slurry is a step of increasing the density of the negative electrode active layer by applying pressure to the dried negative electrode slurry using a roll press or the like. At this time, the rolling may be performed at a temperature condition higher than room temperature.

Specifically, the rolling may be performed at a temperature of from 50°C to 100°C, more specifically from 60°C to 100°C; 75°C to 100°C; 85°C to 100°C; 50°C to 90°C; 60°C to 80°C; or 65°C to 90°C. More specifically, the rolling may be performed at a rolling speed of 2 m/s to 7 m/s, more specifically, 2 m/s to 6.5 m/s; 2 m/s to 6 m/s; 2 m/s to 5.5 m/s; 2 m/s to 5 m/s; 2 m/s to 4.5 m/s; 2 m/s to 4 m/s; 2.5 m/s to 4 m/s; 2.5 m/s to 3.5 m/s; 3.5 m/s to 5 m/s; 5 m/s to 7 m/s; 5.5 m/s to 6.5 m/s; or 6 m/s to 7 m/s. Furthermore, the rolling may be performed under a pressure condition of 50 MPa to 200 MPa, more specifically, under a pressure condition of 50 MPa to 150 MPa; 50 MPa to 100 MPa; 100 MPa to 200 MPa; 150 MPa to 200 MPa; or 80 MPa to 140 MPa.

By performing the rolling of the dried negative electrode slurry under the temperature, speed and/or pressure conditions, the present invention can increase the energy density of the negative electrode while minimizing the change in the alignment of the carbon-based active materials contained in the first negative electrode active layer and the second negative electrode active layer formed.

In addition to the carbon-based active material, the negative electrode slurry may further include a conductive material, a binder, a thickener, and the like, which are conventionally used in the art.

[Mode for Carrying out the Invention]

Hereinafter, the present invention will be described in more detail by way of examples and experimental examples.

However, the following examples and experimental examples are only illustrative of the present invention, and the contents of the present invention are not limited to the following examples and experimental examples.

**Examples 1 to 4 and Comparative Examples 1 to 2: Preparation of a negative electrode for a lithium secondary battery**

A negative electrode for lithium secondary battery was prepared by reflecting the conditions shown in Table 1 below.

First, natural graphite and synthetic graphite were prepared as carbon-based active materials, carbon black was prepared as a conductive material, and carboxymethylcellulose (CMC) and styrene butadiene rubber (SBR) were prepared as a binder.

A first negative electrode slurry and second negative electrode slurry were prepared by mixing 95 parts by weight of the prepared carbon-based negative electrode active material, 1 part by weight of carbon black, 1.5 parts by weight of carboxymethylcellulose (CMC), and 2.5 parts by weight of styrene butadiene rubber (SBR) with water to achieve 50% solids.

At this time, the first carbon-based negative electrode active material included in the first negative electrode slurry was controlled for ① particle shape, ② average particle size, and ③ content in each carbon-based negative electrode active material as shown in Table 1 below. However, if the particle shape of the carbon-based negative electrode active material was spherical, the sphericity degree satisfied between 0.70 and 0.95. In addition, the second carbon-based negative electrode active material included in the second negative electrode slurry was the same as the synthetic graphite included in the first carbon-based negative electrode active material.

Once each negative electrode slurry was prepared, the first negative electrode slurry and the second negative electrode slurry were simultaneously cast onto a copper thin plate (thickness: 8 μm) under roll-to-roll transfer (transfer speed: 5 m/min) using a dual die coater. At this time, the first negative electrode slurry and the second negative electrode slurry were cast so that the average thickness was 90 μm and 100 μm, respectively, along the transfer direction of the copper thin plate.

Then, a magnetic field of 4,750±50 G was applied to the surface of the applied second negative electrode slurry for the time as shown in Table 1, and the negative electrode slurry applied with a magnetic field was hot air dried to form a negative electrode active layer. The formed negative electrode active layer was rolled at 50±1°C with a pressure of 100-150 MPa and a transfer rate of 3 m/s to prepare the negative electrode for lithium secondary battery.

[Table 1]

| | First carbon-based negative electrode active material | | | | | | Magnetic field application time [Sec.] |
|---|---|---|---|---|---|---|---|
| | Natural graphite | | | Synthetic graphite | | | |
| | Shape | Particle size [μm] | Content [wt%] | Shape | Particle size [μm] | Content [wt%] | |
| Example 1 | Spherical | 20 | 5 | Flaky | 17 | 95 | 15 |
| Example 2 | Spherical | 20 | 20 | Flaky | 17 | 80 | 15 |
| Example 3 | Spherical | 20 | 60 | Flaky | 17 | 40 | 15 |
| Example 4 | Spherical | 20 | 20 | Flaky | 17 | 80 | 3 |
| Comparativ e Example 1 | Spherical | 20 | 100 | - | - | - | 15 |

(continued)

| | First carbon-based negative electrode active material | | | | | | Magnetic field application time [Sec.] |
|---|---|---|---|---|---|---|---|
| | Natural graphite | | | Synthetic graphite | | | |
| | Shape | Particle size [$\mu$m] | Content [wt%] | Shape | Particle size [$\mu$m] | Content [wt%] | |
| Comparativ e Example 2 | - | - | - | Flaky | 17 | 100 | 15 |

X-ray diffraction (XRD) of the first negative electrode active layer and the second negative electrode active layer was performed on the prepared negative electrodes to measure the spectra. Here, for the spectrum of the first negative electrode active layer, the second negative electrode active layer was removed by exfoliating the second negative electrode active layer after X-ray diffraction (XRD) measurement of the second negative electrode active layer, and X-ray diffraction was measured on the exposed surface of the first negative electrode active layer, and the measurement conditions of the X-ray diffraction (XRD) are as follows:

- Target: Cu (K$\alpha$ ray) graphite monochromator
- Slit: Diverging slit = 1 degree, receiving slit = 0.1 mm, scattering slit = 1 degree.
- Measurement area: [1,1,0] plane: 76.5 degrees < 2$\theta$ < 78.5 degrees / [0,0,4] plane: 53.5 degrees < 2$\theta$ < 56.0 degrees.

From the spectra measured under the above conditions, the average alignment (O.I) of each carbon-based active material was calculated according to Equation 1. The results are shown in Table 2.

[Equation 1]

$$O.I = I_{004}/I_{110}$$

In Equation 1,

$I_{004}$ represents the area of the peak representing the [0,0,4] crystal face in the X-ray diffraction (XRD) measurement of the negative electrode active layer,

$I_{110}$ represents the area of the peak representing the [1,1,0] crystal face in an X-ray diffraction (XRD) measurement of the negative electrode active layer.

Separately, for each manufactured negative electrode, three arbitrary points within a unit area of 10 cm across and 10 cm long were set on the surface of the second negative electrode active layer. Then, using a spectral colorimeter, the CIE color difference of the three points was measured. The average value of L* was obtained from the results of the three measured points, and the average value of the deviation of the three points from the average value of L* was calculated to obtain $\Delta$L*. Then, the second negative electrode active layer on which the CIE colorimetry was measured was removed by exfoliation, and the CIE colorimetry was measured on the surface of the exposed first negative electrode active layer in the same way. The measured results are shown in Table 2 below.

[Table 2]

| | First negative electrode active layer | | | Second negative electrode active layer | | |
|---|---|---|---|---|---|---|
| | Alignment(O.I$_{1st}$) | L* | $\Delta$L | Alignment(O.I$_{2nd}$) | L* | $\Delta$L |
| Example 1 | 0.21 | 34.13 | 0.2 | 0.19 | 32.85 | 0.1 |
| Example 2 | 0.24 | 34.22 | 0.2 | 0.18 | 32.56 | 0.2 |
| Example 3 | 0.27 | 34.91 | 0.3 | 0.18 | 32.79 | 0.2 |
| Example 4 | 0.57 | 39.06 | 0.2 | 0.31 | 34.11 | 0.3 |
| Comparative Example 1 | 0.33 | 39.06 | 0.3 | 0.19 | 32.98 | 0.4 |
| Comparative Example 2 | 0.18 | 34.55 | 0.4 | 0.19 | 32.75 | 0.3 |

**Comparative Example 3: Preparation of a negative electrode for a lithium secondary battery**

The negative electrode for lithium secondary battery was prepared by the same method as in Example 2, except that a magnetic field was not applied after casting of the first and second negative electrode slurries.

The first negative electrode active layer and the second negative electrode active layer of the prepared negative electrode had an alignment (O.I) of 5.41 and 16.87 for carbon-based active materials, respectively. In addition, the L* and ΔL of the first negative electrode active layer were 43 and 0.4, respectively, and the L* and ΔL of the second negative electrode active layer were 39 and 0.3, respectively.

**Examples 5 to 8 and Comparative Examples 4 to 6. Preparation of a lithium secondary battery**

$LiNi_{0.7}Co_{0.1}Mn_{0.1}Al_{0.1}O_2$ with a particle size of 5 μm was prepared as a positive electrode active material, mixed with polyvinylidene fluoride as a carbon-based conductive material and binder in a weight ratio of 94:3:3 in N-methyl pyrrolidone (NMP) to form a slurry, cast on an aluminum thin plate, dried in a vacuum oven at 120 °C, and rolled to prepare a positive electrode.

A separator made of 18 μm of polypropylene was interposed between the positive electrode obtained above and the negative electrode prepared in Examples 1-4 and Comparative Examples 1-3, respectively, and inserted into the case, and then an electrolyte composition was injected to assemble the lithium secondary battery.

The type of negative electrode applied to each lithium secondary battery is shown in Table 3 below.

[Table 3]

|  | Type of negative electrode applied |
|---|---|
| Example 5 | Negative electrode prepared in Example 1 |
| Example 6 | Negative electrode prepared in Example 2 |
| Example 7 | Negative electrode prepared in Example 3 |
| Example 8 | Negative electrode prepared in Example 4 |
| Comparative Example 4 | Negative electrode prepared in Comparative Example 1 |
| Comparative Example 5 | Negative electrode prepared in Comparative Example 2 |
| Comparative Example 6 | Negative electrode prepared in Comparative Example 3 |

**Experimental Examples.**

The following experiments were conducted to evaluate i) the adhesion between the negative electrode current collector and the negative electrode active layer and ii) the energy density of the negative electrode according to the present invention.

a) Evaluation of adhesion between negative electrode current collector and negative electrode active layer

Specimens were manufactured by cutting the negative electrodes prepared in Examples 1-4 and Comparative Examples 1-3 so that the horizontal and vertical lengths were 25 mm and 70 mm, respectively.

Using double-sided tape, the prepared specimen was attached to the glass plate, with the current collector facing the glass plate. After fixing the specimen on the glass plate in the tensile tester, the negative electrode active layer of each negative electrode was exfoliated at an angle of 90° at a speed of 100 mm/min at 25°C. The exfoliation force measured in real time was defined as the interfacial adhesion between the negative electrode current collector and the negative electrode active layer, and the measured results are shown in Table 4 below.

b) Evaluation of energy density

Each negative electrode prepared in Examples 1-4 and Comparative Examples 1-3 was drilled to have a hole with a size of 2 $cm^2$, and a constant current charge and discharge by the three-terminal method was performed to measure the charge and discharge capacity. Specifically, the energy density of each negative electrode was measured by making a sample cell containing each negative electrode as a sample electrode. Here, the sample cell was designed to have a structure comprising a laminate of each negative electrode, a separator, and a counter electrode, with a reference electrode introduced on the upper part separately. Furthermore, the sample cells were applied with a solution

of $LiPF_6$ dissolved in a mixed solution of ethylene carbonate (EC) and methylethyl carbonate (MEC) (EC:MEC=1:2, vol.:vol.) to a concentration of 1 M as the electrolyte 10, and metal lithium was used as the counter electrode and reference electrode, and a polyethylene microporous membrane was used as the separator.

The obtained sample cells were charged to 0 V (V vs. Li/Li$^+$) with a constant current of 0.2 mA/cm$^2$ for the surface area of each negative electrode, and discharged to 1 V (V vs. Li/Li$^+$) with a constant current of 0.2 mA/cm$^2$, and the initial charge/discharge efficiency per unit volume of each sample cell was calculated. The results are shown in Table 4 below.

[Table 4]

|  | Adhesion [gf/cm] | Initial charge/discharge efficiency [%] |
|---|---|---|
| Example 1 | 41 | 95.3 |
| Example 2 | 43 | 95.0 |
| Example 3 | 38 | 94.7 |
| Example 4 | 40 | 93.8 |
| Comparative Example 1 | 21 | 93.5 |
| Comparative Example 2 | 11 | 95.4 |
| Comparative Example 3 | 9 | 92.1 |

As shown in Table 4, it can be seen that the negative electrode for lithium secondary battery according to the present invention have a high adhesion between the negative electrode current collector and the negative electrode active layer and a large energy density. Specifically, the negative electrodes prepared in the examples required an exfoliation force of more than 35 gf/cm to exfoliate the negative electrode current collector and the negative electrode active layer, and have an initial charge/discharge efficiency of 93.6% or more.

This means that the negative electrodes of the examples have a structure in which a first negative electrode active layer and a second negative electrode active layer are stacked sequentially on the negative electrode current collector, and the first negative electrode active layer includes synthetic graphite and natural graphite as carbon-based negative electrode active materials, wherein by controlling the alignment (O.I$_{1st}$) of the carbon-based negative electrode active material contained in the first negative electrode active layer and the content of synthetic graphite in a certain range, the adhesion of the negative electrode active layer to the negative electrode current collector is increased, and the electrical performance of the negative electrode active layer is improved.

From these results, it can be seen that the negative electrode for a lithium secondary battery according to the present invention has excellent adhesion between the negative electrode current collector and the negative electrode active layer and high energy density.

Although the above has been described with reference to a preferred embodiment of the present invention, it will be understood by those skilled in the art or having ordinary knowledge in the art that various modifications and changes can be made to the present invention without departing from the field of thought and technology described in the following patent claims.

Accordingly, the technical scope of the present invention is not limited to what is described in the detailed description of the specification, but should be defined by the claims of the patent.

**Claims**

1. A negative electrode for lithium secondary battery comprising:

a negative electrode current collector; a first negative electrode active layer provided on at least one surface of the negative electrode current collector and containing a first carbon-based negative electrode active material; and a second negative electrode active layer provided on the first negative electrode active layer and containing a second carbon-based negative electrode active material, wherein the first carbon-based negative electrode active material includes natural and synthetic graphite, and the first negative electrode active layer and the second negative electrode active layer have an alignment (O.I) of a carbon-based negative electrode active material, represented by Equation 1 below, of 0.1 to 0.9, respectively:

[Equation 1]

$$O.I = I_{004}/I_{110}$$

In Equation 1,

$I_{004}$ represents the area of the peak representing the [0,0,4] crystal face in the X-ray diffraction (XRD) measurement of the negative electrode active layer,
$I_{110}$ represents the area of the peak representing the [1,1,0] crystal face in an X-ray diffraction (XRD) measurement of the negative electrode active layer.

2. The negative electrode for lithium secondary battery of claim 1, wherein
the content of synthetic graphite exceeds 50 wt% with respect to the total weight of the first carbon-based negative electrode active material.

3. The negative electrode for lithium secondary battery of claim 1, wherein
the second carbon-based negative electrode active material includes synthetic graphite.

4. The negative electrode for lithium secondary battery of claim 1, wherein

a synthetic graphite is a flaky particle, and
a natural graphite is a spherical particle.

5. The negative electrode for lithium secondary battery of claim 1, wherein

the average particle size of synthetic graphite is between 5 μm and 20 μm;
the average particle size of natural graphite is between 15 μm and 25 μm, wherein
the average particle size of the synthetic graphite is smaller than the average particle size of natural graphite.

6. The negative electrode for lithium secondary battery of claim 1, wherein
the total thickness of the first negative electrode active layer and the second negative electrode active layer is 50 μm to 300 μm.

7. The negative electrode for lithium secondary battery of claim 1, wherein
the average thickness of the first negative electrode active layer has a ratio of 10% to 100% with respect to the average thickness of the second negative electrode active layer.

8. The negative electrode for lithium secondary battery of claim 1, wherein
the alignment ($O.I_{2nd}$) of the second carbon-based negative electrode active material has a ratio of 10% to 100% with respect to the alignment ($O.I_{1st}$) of the first carbon-based negative electrode active material.

9. A manufacturing method of a negative electrode for lithium secondary battery comprising:

applying a first negative electrode slurry including a first carbon-based negative electrode active material and a second negative electrode slurry including a second carbon-based negative electrode active material on a negative electrode current collector simultaneously;
applying a magnetic field to the applied first negative electrode slurry and the second negative electrode slurry; and
forming a first negative electrode active layer and a second negative electrode active layer by drying the first negative electrode slurry and the second negative electrode slurry in which a magnetic field is applied, wherein
the first carbon-based negative electrode active material includes natural and synthetic graphite, and
the first negative electrode active layer and the second negative electrode active layer have an alignment (O.I) of a carbon-based negative electrode active material, represented by Equation 1 below, of 0.1 to 0.9, respectively:

[Equation 1]

$$O.I = I_{004}/I_{110}$$

In Equation 1,

$I_{004}$ represents the area of the peak representing the [0,0,4] crystal face in the X-ray diffraction (XRD) measurement of the negative electrode active layer,

$I_{110}$ represents the area of the peak representing the [1,1,0] crystal face in an X-ray diffraction (XRD) measurement of the negative electrode active layer.

10. The manufacturing method of a negative electrode for lithium secondary battery of claim 9, wherein applying a magnetic field applies a magnetic field of 2,000G to 6,000G.

11. The manufacturing method of a negative electrode for lithium secondary battery of claim 9, wherein applying a magnetic field is performed for 5 to 60 seconds.

12. The manufacturing method of a negative electrode for lithium secondary battery of claim 9, wherein forming the first negative electrode active layer and the second negative electrode active layer comprises:

drying the first negative electrode slurry and second negative electrode slurry; and
rolling a dried first negative electrode slurry and second negative electrode slurry.

[FIG. 1]

5.0kV 6.8mm x1.00k SE(M)     50.0um

[FIG. 2]

15.0kV 8.2mm x1.00k SE(M)     50.0um

| INTERNATIONAL SEARCH REPORT | International application No. |
| | **PCT/KR2023/016609** |

**A.    CLASSIFICATION OF SUBJECT MATTER**

**H01M 4/583**(2010.01)i; **H01M 4/36**(2006.01)i; **H01M 4/133**(2010.01)i; **H01M 4/1393**(2010.01)i; **H01M 4/02**(2006.01)i

According to International Patent Classification (IPC) or to both national classification and IPC

**B.    FIELDS SEARCHED**

Minimum documentation searched (classification system followed by classification symbols)

H01M 4/583(2010.01); B01D 39/16(2006.01); D01D 5/00(2006.01); H01M 10/052(2010.01); H01M 10/0525(2010.01); H01M 4/131(2010.01); H01M 4/133(2010.01); H01M 50/249(2021.01); H01M 50/258(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지용 음극(cathode for lithium secondary battery), 천연흑연(natural graphite), 인조흑연(artificial graphite), 자기장(magnetic field)

**C.    DOCUMENTS CONSIDERED TO BE RELEVANT**

| Category* | Citation of document, with indication, where appropriate, of the relevant passages | Relevant to claim No. |
|---|---|---|
| A | KR 10-2018-0035693 A (LG CHEM, LTD.) 06 April 2018 (2018-04-06) See paragraphs [0043], [0055], [0094]-[0102] and [0107]-[0108]; and claims 1-2, 11-12, 14-15 and 20. | 1-12 |
| A | CN 113036298 A (NINGDE CONTEMPORARY AMPEREX TECH. CO., LTD.) 25 June 2021 (2021-06-25) See paragraphs [0041] and [0074]-[0086]; and claims 1-2, 6 and 10. | 1-12 |
| A | KR 10-2022-0146194 A (SAMSUNG SDI CO., LTD.) 01 November 2022 (2022-11-01) See entire document. | 1-12 |
| A | KR 10-2022-0028258 A (UIF (UNIVERSITY INDUSTRY FOUNDATION), YONSEI UNIVERSITY) 08 March 2022 (2022-03-08) See entire document. | 1-12 |
| A | KR 10-2021-0123480 A (LG ENERGY SOLUTION, LTD.) 14 October 2021 (2021-10-14) See entire document. | 1-12 |

☑ Further documents are listed in the continuation of Box C.        ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **01 February 2024** | **02 February 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| | International application No. |
| --- | --- |
| | **PCT/KR2023/016609** |

**C. DOCUMENTS CONSIDERED TO BE RELEVANT**

| Category* | Citation of document, with indication, where appropriate, of the relevant passages | Relevant to claim No. |
| --- | --- | --- |
| PX | KR 10-2544496 B1 (LG ENERGY SOLUTION, LTD.) 20 June 2023 (2023-06-20)<br>See abstract; and claims 1, 3-7 and 9-12.<br>※This document is the published patent of an earlier application that serves as a basis for claiming priority of the present international application. | 1-12 |

Form PCT/ISA/210 (second sheet) (July 2022)

**INTERNATIONAL SEARCH REPORT**
Information on patent family members

International application No.

**PCT/KR2023/016609**

| Patent document cited in search report | | | Publication date (day/month/year) | Patent family member(s) | | | Publication date (day/month/year) |
|---|---|---|---|---|---|---|---|
| KR | 10-2018-0035693 | A | 06 April 2018 | CN | 108701816 | A | 23 October 2018 |
| | | | | CN | 108701816 | B | 12 November 2021 |
| | | | | EP | 3396745 | A2 | 31 October 2018 |
| | | | | EP | 3396745 | A4 | 12 June 2019 |
| | | | | EP | 3396745 | B1 | 01 November 2023 |
| | | | | KR | 10-1966144 | B1 | 05 April 2019 |
| | | | | US | 2019-0305308 | A1 | 03 October 2019 |
| | | | | US | 2022-0328833 | A1 | 13 October 2022 |
| | | | | WO | 2018-062836 | A2 | 05 April 2018 |
| | | | | WO | 2018-062836 | A3 | 14 June 2018 |
| CN | 113036298 | A | 25 June 2021 | CN | 113036298 | B | 11 February 2022 |
| KR | 10-2022-0146194 | A | 01 November 2022 | CN | 115241417 | A | 25 October 2022 |
| | | | | EP | 4080604 | A2 | 26 October 2022 |
| | | | | EP | 4080604 | A3 | 02 November 2022 |
| | | | | JP | 2022-167890 | A | 04 November 2022 |
| | | | | US | 2022-0352543 | A1 | 03 November 2022 |
| KR | 10-2022-0028258 | A | 08 March 2022 | KR | 10-2509597 | B1 | 13 March 2023 |
| KR | 10-2021-0123480 | A | 14 October 2021 | CN | 113939929 | A | 14 January 2022 |
| | | | | EP | 3965184 | A1 | 09 March 2022 |
| | | | | EP | 3965184 | A4 | 18 January 2023 |
| | | | | US | 2022-0255059 | A1 | 11 August 2022 |
| | | | | WO | 2021-201399 | A1 | 07 October 2021 |
| KR | 10-2544496 | B1 | 20 June 2023 | None | | | |

Form PCT/ISA/210 (patent family annex) (July 2022)

**EP 4 447 164 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220183044